# EUROPÄISCHE PATENTSCHRIFT

(11) **EP 1 812 255 B1**
(45) Veröffentlichungstag und Bekanntmachung des Hinweises auf die Patenterteilung: **11.04.2012**
(21) Anmeldenummer: 05793544.7
(22) Anmeldetag: 12.10.2005
(51) Int. Cl.: B60H 1/03, B60H 1/22

(54) **KRAFTFAHRZEUG-KLIMAANLAGE MIT ZUSÄTZLICHER HEIZUNG**
MOTOR VEHICLE AIR-CONDITIONING SYSTEM PROVIDED WITH AN ADDITIONAL HEATING
SYSTEME DE CLIMATISATION AUTOMOBILE COMPORTANT UN CHAUFFAGE SUPPLEMENTAIRE

(30) Priorität: 10.11.2004 DE 102004054439
(43) Veröffentlichungstag der Anmeldung: 01.08.2007
(73) Patentinhaber: Behr GmbH & Co. KG, 70469 Stuttgart (DE)
(72) Erfinder: BOUCHALAT, Karim-Mathieu, 70174 Stuttgart (DE)
(86) Internationale Anmeldenummer: PCT/EP2005/010977
(87) Internationale Veröffentlichungsnummer: WO 2006/050780

(56) Entgegenhaltungen:
- DE-A1- 2 614 715
- DE-A1- 10 052 136
- DE-A1- 19 650 941
- DE-C1- 4 342 191
- PATENT ABSTRACTS OF JAPAN Bd. 008, Nr. 143 (M-306), 4. Juli 1984 (1984-07-04) & JP 59 040916 A (MITSURU YAMANAKA), 6. März 1984 (1984-03-06)

## Beschreibung

Die Erfindung betrifft eine Kraftfahrzeug-Klimaanlage mit zusätzlicher Heizung gemäß dem Oberbegriff des Anspruches 1.

Bekannt ist eine Kraftfahrzeug-Klimaanlage mit der Anordnung einer zusätzlichen Heizung für einen Stand-Heizbetrieb im Haupt-Strömungskanal, wobei die zusätzliche Heizung nach dem Gebläse und vor dem Verdampfer angeordnet ist. Eine derartige Anordnung lässt noch Wünsche offen, insbesondere in Hinblick auf den Druckabfall im Normalbetrieb.

Die DE 100 52 136 A1 zeigt eine Anlage gemäß Oberbegriff des Anspruchs 1

Ausgehend von diesem Stand der Technik ist es Aufgabe der Erfindung, eine verbesserte Kraftfahrzeug-Klimaanlage zur Verfügung zu stellen. Diese Aufgabe wird gelöst durch eine Kraftfahrzeug-Klimaanlage mit zusätzlicher Heizung mit den Merkmalen des Anspruchs 1. Vorteilhafte Ausgestaltungen sind Gegenstand der Unteransprüche.

Erfindungsgemäß ist eine Kraftfahrzeug-Klimaanlage mit zusätzlicher Heizung, insbesondere mit einer Brennstoffheizung, für einen Standheizbetrieb vorgesehen, bei der in Abhängigkeit von Klappenstellungen ein Luftkanal in zwei unterschiedlichen, entgegengesetzten Richtungen durchströmbar ist. Durch die optimale Raumausnutzung kann auf diese Weise eine kompakt bauende Klimaanlage zur Verfügung gestellt werden. Ferner ist der Druckabfall im Normalbetrieb auf Grund der optimierten Luftführung zumindest teilweise vorbei an der zusätzlichen Heizung verringert.

Beim in zwei Richtungen durchströmbaren Luftkanal handelt es sich bevorzugt um den Kaltluftkanal. Dieser ist bevorzugt als Bypass zum Heizer ausgebildet.

Bevorzugt führt der Luftkanal im Standheizbetrieb von der zusätzlichen Heizung erwärmte Luft mindestens einem weiterführenden Luftkanal zum Fahrzeuginnenraum zu. Hierbei handelt es sich insbesondere bevorzugt um einen Luftkanal zum hinteren Fußraum, wobei dieser auch in einer Schlafkabine eines LKWs angeordnet sein kann.

Bei der zusätzlichen Heizung handelt es sich vorzugsweise um eine Brennstoffheizung. Diese ist bevorzugt von einer Stirnwand getrennt von dem Heizer und Verdampfer der Klimaanlage angeordnet, wobei die Stirnwand mindestens eine Öffnung für die Durchführung eines Luftkanals zur/von der zusätzlichen Heizung aufweist.

Eine derartige Kraftfahrzeug-Klimaanlage mit zusätzlicher Heizung ist insbesondere für LKWs geeignet.

Im Folgenden wird die Erfindung anhand dreier Ausführungsbeispiele unter Bezugnahme auf die Zeichnung im Einzelnen erläutert. Es zeigen:
- Fig. 1: eine schematische Darstellung einer Kraftfahrzeug-Klimaanlage gemäß dem ersten Ausführungsbeispiel, wobei im rechten Teil die Öffnung in der Stirnwand dargestellt ist,
- Fig. 2: eine schematische Darstellung einer Kraftfahrzeug-Klimaanlage gemäß dem zweiten Ausführungsbeispiel, wobei im rechten Teil die Öffnung in der Stirnwand dargestellt ist,
- Fig.3: eine schematische Darstellung einer Kraftfahrzeug-Klimaanlage gemäß dem dritten Ausführungsbeispiel, wobei im rechten Teil die Öffnung in der Stirnwand dargestellt ist, und
- Fig. 4: ein Diagramm zur Verdeutlichung einer Regelung der Klappen der Kraftfahrzeug-Klimaanlage gemäß dem ersten Ausführungsbeispiel.

Eine Kraftfahrzeug-Klimaanlage 1 weist einen in einem Gehäuse 2 angeordneten Filter 3 und ein nachfolgend angeordnetes Gebläse 4 auf. Ferner ist im Gehäuse 2 ein Verdampfer 5, ein Heizer 6 und als zusätzliche Heizung eine Zu- oder Standheizung 7 angeordnet, wobei die Standheizung 7 insbesondere im Stand-Heizbetrieb von zu erwärmender und dem Fahrzeuginnenraum zuzuführender Luft durchströmt wird. Sie kann ebenfalls in einem Zuheizbetrieb von zu erwärmender Luft durchströmt werden.

Die Funktion der Kraftfahrzeug-Klimaanlage 1 im Normalbetrieb, d.h. bei laufendem Motor, unterscheidet sich nicht von der einer herkömmlichen Kraftfahrzeug-Klimaanlage. So gelangt die von der Umgebung angesaugte Luft durch den Filter 3 oder die Umluft direkt zum Gebläse 4, von wo aus sie den Verdampfer 5 durchströmt. Je nach gewünschter Fahrzeuginnenraum-Temperatur bzw. Betriebsart wird die kalte Luft ganz oder teilweise durch den Heizer 6 über einen Warmluftkanal 8 oder bzw. und durch einen Bypass oder Kaltluftkanal 9 an demselben vorbei geleitet. Bei einem Mischbetrieb, d.h. bei einem Teilluftstrom durch den Warmluftkanal 8, erfolgt eine Vermischung des Kalt- und Warmluftstroms im Mischraum 10 bevor die gemischte oder gegebenenfalls auch geschichtete Luft den Luftkanälen zur Windschutzscheibe (Defrost), zum Fußraum und/oder der Innenraumbelüftung zugeführt wird. Die Temperaturregelung erfolgt mit Hilfe einer Luftmisch-Klappe 11, wobei am Ende des Warmluftkanals 8 eine Klappe 12 angeordnet ist, welche den Warmluftkanal 8 bei Bedarf verschließt. Die Standheizung 7 ist mit Hilfe einer Standheizungs-Klappe 13 vom Warmluftkanal 8 abgetrennt, welche bei Normalbetrieb geschlossen ist.

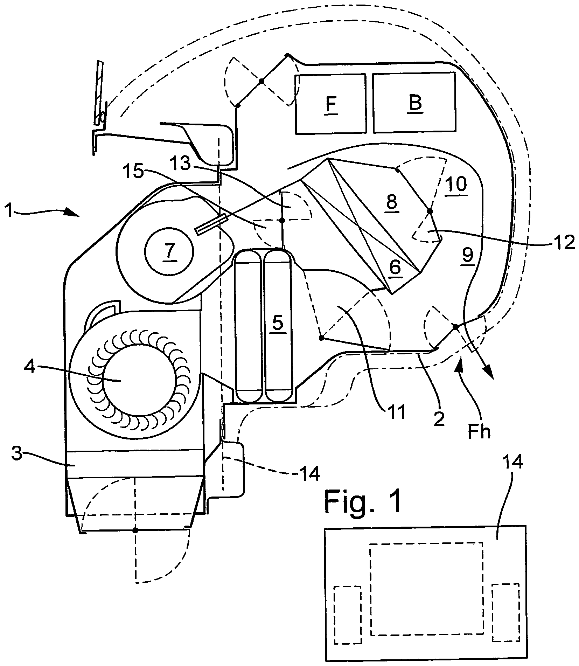

Im Standheizbetrieb, d.h. bei stehendem Motor und somit im Wesentlichen stehender Kraftfahrzeug-Klimaanlage 1 verschließt die Luftmisch-Klappe 11 den Kaltluftkanal 9. Der Warmluftkanal 8 wird mischraumseitig durch die Klappe 12 verschlossen, wohingegen ein Luftkanal 15 durch die Standheizung 7, mittels der Standheizungs-Klappe 13 freigegeben wird, so dass die vom elektrisch angetriebenen Gebläse 4 angesaugte Luft durch die Standheizung 7 strömt und von derselben erwärmt wird. Durch die zuvor genannten Luftkanäle kann die erwärmte Luft direkt zur Windschutzscheibe (Defrost) und dem Fahrzeuginnenraum zugeführt werden. Zudem oder - bei entsprechender Einstellung - ausschließlich gelangt die erwärmte Luft direkt in den hinteren Fußraum Fh oder zur Schlafkabine des Fahrers (vgl. Pfeil entlang des Kaltluftkanals 9 in Fig. 1). Hierfür wird der Kaltluftkanal 9 entgegen der Strömungsrichtung des Normalbetriebs durchströmt. Auf Grund des Strömungsverlaufs sind sowohl für den Normalbetrieb als auch für den Standheizbetrieb keine Rückschlagklappen erforderlich.

Wie aus Fig. 1 ersichtlich, sind der Filter 3, das Gebläse 4 und die Standheizung 7 links von der Kraftfahrzeug-Stirnwand 14, die durch eine gestrichelte Linie verdeutlicht ist, also dem Fahrzeuginnenraum abgewandt, angeordnet. Die anderen Teile sind auf der anderen Seite der Stirnwand 14, also dem Fahrzeuginnenraum zugewandt, angeordnet, wobei im rechten Teil von Fig. 1 die Stirnwand 14 schematisch mit den hierin vorgesehenen Öffnungen dargestellt ist. Die kleinen durch gestrichelte Linien angedeuteten Öffnungen rechts und links der zentralen Öffnung für die Luftkanäle der Klimaanlage 1 sind für die dem Gebläse 4 zuzuführende vom Fahrzeuginnenraum kommende Umluft.

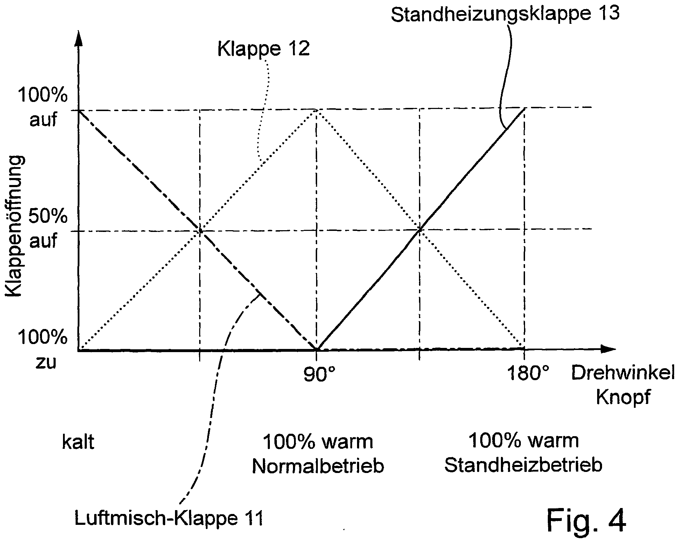

Die drei Klappen 11, 12 und 13 lassen sich über einen um 180° drehbaren Knopf an der Bedienkonsole der Kraftfahrzeug-Klimaanlage steuern, wobei die Stellbewegung über Bowdenzüge oder einen Aktuator übertragen wird (nicht dargestellt). Für die Kinematik der Stellbewegungen ist eine Kurvenscheibe vorgesehen. Die Regelung der Klappen ist in Fig. 4 dargestellt. Hierbei ist ersichtlich, dass die Luftmisch-Klappe 11 ausgehend von maximaler Kühlleistung (0°) den Kaltluftkanal 9 bei einer Drehung des Knopfes und hiermit verbundenen höheren Solltemperaturen zunehmend verschließt, während die Klappe 12 entsprechend geöffnet wird, bis die maximale Heizleistung im Normalbetrieb, vorliegend bei einer Drehung des Knopfes um 90° von der Kaltstellung ausgehend erreicht ist. Ab dieser Stellung mit maximaler Heizleistung bis zu einer Drehung des Knopfes um 180° von der Kaltstellung ausgehend erfolgt ein Zuheiz- oder Standheizbetrieb. Für den Zuheizbetrieb wird die Klappe 12 stufenweise geschlossen und die Standheizungs-Klappe 13 entsprechend geöffnet, wobei die Luftmisch-Klappe 11 in ihrer den Kaltluftkanal 9 verschließenden Stellung verbleibt. Im maximalen Zuheizbetrieb ist die Standheizungs-Klappe 13 ganz geöffnet und die Klappe 12 ganz geschlossen. Bei stehendem Motor handelt es sich hierbei um den Standheizbetrieb. Vorliegend sind bei einem Drehwinkel von 135° und 180° Rastungen vorgesehen, wobei bei der Rastung im 135°-Winkel ein Zuheizen bei laufendem Motor und bei der Rastung im 180°-Winkel ein ausschließliches Heizen mit der Standheizung erfolgt. Andere Regelungen sind möglich, beispielsweise mehr Stufen zwischen dem 90° und 180°-Winkel oder nur eine an Stelle der beschriebenen zwei Stufen. Des Weiteren versteht es sich von selbst, dass der Drehbereich für den drehbaren Knopf nicht auf 180° beschränkt ist, vielmehr können die beschriebenen Schritte auch auf einen kleineren oder größeren Winkelbereich skaliert, ablaufen.

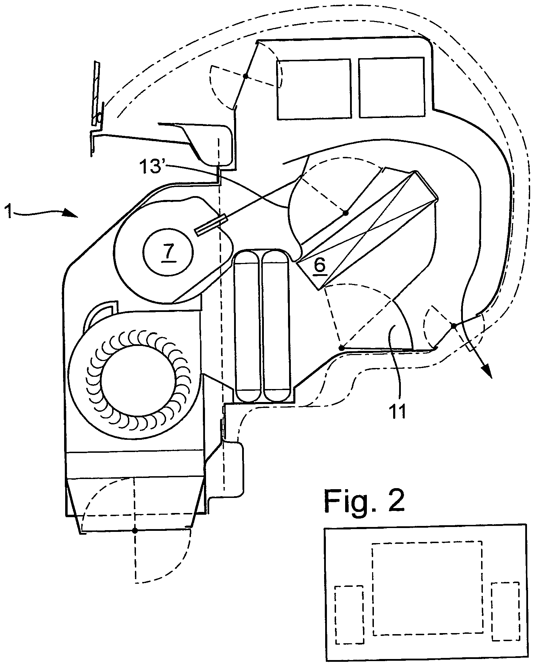

Gemäß dem in Fig. 2 dargestellten zweiten Ausführungsbeispiel ist der Heizer 6 gedreht angeordnet, wobei der Heizer 6 auch im Standheizbetrieb von zu erwärmender Luft durchströmt wird. Die Standheizungs-Klappe 13' übernimmt auf Grund ihrer Anordnung hinter dem Heizer 6 auch die Funktion der Klappe 12, welche somit entfällt, so dass an Stelle von drei Klappen gemäß dem zweiten Ausführungsbeispiel nur zwei Klappen erforderlich sind. Wiederum kann die erwärmte Luft im Standheizbetrieb direkt in den hinteren Fußraum Fh oder zur Schlafkabine des Fahrers gelangen, wofür der Kaltluftkanal 9 entgegen der Strömungsrichtung im Normalbetrieb durchströmt wird. Ferner kann durch das Durchströmen des Heizers 6 auch im Standheizbetrieb die Restwärme des Heizers 6 (also die Restwärme des Motors) genutzt werden, unabhängig davon ob die Standheizung voll oder nur teilweise eingeschaltet ist.

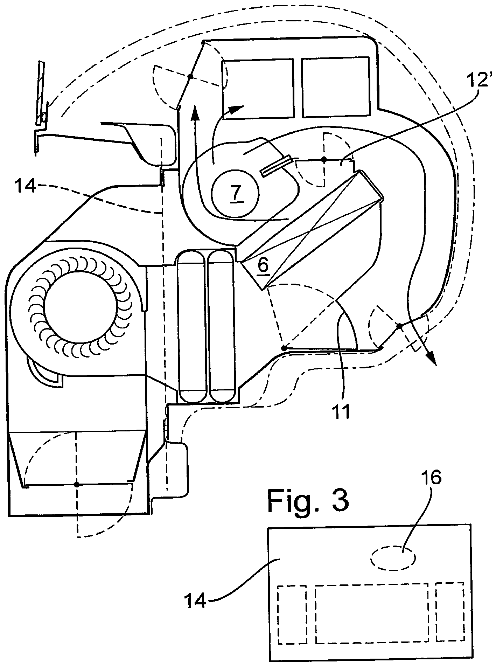

Das in Fig. 3 dargestellte dritte Ausführungsbeispiel entspricht im Wesentlichen dem zuvor beschriebenen zweiten Ausführungsbeispiel, jedoch ist die Standheizung 7 auf der anderen Seite der Stirnwand 14 angeordnet, weshalb in der Stirnwand 14 noch eine zusätzliche Öffnung 16, schematisch dargestellt im rechten Teil der Fig.3, für die Anschlussleitungen der. Standheizung 7 vorgesehen ist, jedoch können die anderen Öffnungen kleiner ausfallen. Ferner ist keine spezielle Standheizungs-Klappe 13 vorgesehen, sondern nur eine der Klappe 12 entsprechende Klappe 12', welche im Standheizbetrieb den Strömungsweg der Luft durch die Standheizung 7 festlegt. Im Normalbetrieb kann die Luft teilweise auch durch die (nicht beheizte) Standheizung 7 strömen. Auch in diesem Fall kann die erwärmte Luft im Standheizbetrieb direkt in den hinteren Fußraum Fh oder zur Schlafkabine des Fahrers gelangen, wofür wiederum der Kaltluftkanal 9 entgegen der Strömungsrichtung im Normalbetrieb durchströmt wird. Diese Ausgestaltung ermöglicht eine noch kompaktere Bauweise, da die Standheizung 7 im Innenraum direkt über dem Heizer 6 angeordnet ist. Dadurch wird sie auch besser durchströmt als im zuvor beschriebenen Ausführungsbeispiel.

### Bezugszeichenliste

1 Kraftfahrzeug-Klimaanlage
2 Gehäuse
3 Filter
4 Gebläse
5 Verdampfer
6 Heizer
7 Standheizung
8 Warmluftkanal
9 Kaltluftkanal
10 Mischraum
11 Luftmisch-Klappe
12, 12' Klappe
13, 13' Standheizungs-Klappe
14 Stirnwand
15 Luftkanal
16 Öffnung
B Innenraumbelüftung
D Defrost
F Fußraum
Fh Fußraum hinten
B Innenraumbelüftung

## Patentansprüche

1. Kraftfahrzeug-Klimaanlage mit einem Heizer (6) und einer zusätzlichen Heizung (7), insbesondere mit einer Brennstoffheizung, für einen Standheizbetrieb, einem Warmluftkanal (8), einen den Heizer (6) umgehenden Kaltluftkanal (9) und einer Luftmischklappe (11) welche den Warmluftstrom durch den Heizer (6) über den Warmluftkanal (8) und den Kaltluftstrom durch den Kaltluftkanal (9) regelt, **dadurch gekennzeichnet, dass** in Abhängigkeit von Klappenstellungen der Kaltluftkanal (9) im Normalbetrieb in einer ersten Richtung durchströmbar ist und in einem Standheizbetrieb die Luftmischklappe (11) den Kaltluftkanal (9) verschließt, wobei der Kaltluftkanal (9) in einer der ersten Richtung entgegengesetzten Richtung durchströmbar ist.

2. Kraftfahrzeug-Klimaanlage nach Anspruch 1, **dadurch gekennzeichnet, dass** der Luftkanal (9) im Standheizbetrieb von der zusätzlichen Heizung erwärmte Luft, mindestens einem weiterführenden Luftkanal zu einem Fahrzeuginnenraum zuführt.

3. Kraftfahrzeug-Klimaanlage nach Anspruch 2, **dadurch gekennzeichnet, dass** der weiterführende Luftkanal zu einem hinteren Fußraum (Fh) führt.

4. Kraftfahrzeug-Klimaanlage nach einem der vorhergehenden Ansprüche, **dadurch gekennzeichnet, dass** die zusätzliche Heizung eine Brennstoffheizung ist, welche von einer Stirnwand des kraftfahrzeuges (14) getrennt von dem Heizer (6) und Verdampfer (5) der Klimaanlage (1) angeordnet ist, wobei die Stirnwand (14) mindestens eine Öffnung für die Durchführung eines Luftkanals aufweist.

5. Kraftfahrzeug-Klimaanlage nach einem der vorhergehenden Ansprüche, **dadurch gekennzeichnet, dass** eine Standheizungs-Klappe (13; 13') vorgesehen ist, welche den Luftstrom durch die Standheizung (7) regelt.

6. Kraftfahrzeug-Klimaanlage nach einem der vorhergehenden Ansprüche, **dadurch gekennzeichnet, dass** eine Klappe (12; 12') in normaler Strömungsrichtung gesehen am Ende des Warmluftkanals (8) vorgesehen ist, welche ein Rückströmen von warmer Luft im Standheizbetrieb durch den Heizer (6) verhindert.

7. Kraftfahrzeug-Klimaanlage nach einem der vorhergehenden Ansprüche, **dadurch gekennzeichnet, dass** der Verdampfer (5) sowohl im Normalbetrieb als auch im Standheizbetrieb durchströmt wird.

8. Verfahren zum Betreiben einer Kraftfahrzeug-Klimaanlage mit einem Gebläse (4), einem Verdampfer (5), einem Heizer (6), einer Standheizung (7), einem Warmluftkanal (8), einen den Heizer (6) umgehenden Kaltluftkanal (9) und einer Luftmischklappe (11) welche den Warmluftstrom durch den Heizer (6) über den Warmluftkanal (8) und den Kaltluftstrom durch den Kaltluftkanal (9) regelt, **dadurch gekennzeichnet, dass** bei einem Wechsel der Betriebsart von Normalbetrieb auf Standheizungsbetrieb die Luftmischklappe (11) den Kaltluftkanal verschließt und die Strömungsrichtung im Kaltluftkanal (9) umgekehrt wird.

## Claims

1. Motor vehicle air conditioner having a heater (6) and an additional heating unit (7), in particular having a fuel heating unit, for auxiliary heating operation, a hot air duct (8), a cold air duct (9), which bypasses the heater (6), and an air mixing flap (11), which regulates the hot air flow through the heater (6) via the hot air duct (8) and the cold air flow through the cold air duct (9), **characterized in that** air can flow through the cold air duct (9) in normal operation in a first direction depending on flap positions, and in auxiliary heating operation, the air mixing flap (11) closes the cold air duct (9), air being able two flow through the cold air duct (9) in a direction opposite to the first direction.

2. Motor vehicle air conditioner according to clam 1, **characterized in that** the air duct (9), in auxiliary heating operation, supplies air heated by the additional heating unit to at least one continuing air duct to a vehicle interior.

3. motor vehicle air conditioner according to Claim 2, **characterized in that** the continuing air duct leads two a rear foot well (Fh).

4. Motor vehicle air conditioner according to one of the preceding claims, **characterized in that** the additional heating unit is a fuel heating unit, which is arranged so it is separated from the heater (6) and vaporizer (5) of the air conditioner (1) by a front wall (14) of the motor vehicle, the front well (14) having at least one opening for the passage of an air duct.

5. Motor vehicle air conditioner according to one of the preceding claims, **characterized in that** an auxiliary heating unit flap (13; 13') is provides, which regulates the airflow through the auxiliary heating unit (7).

6. Motor vehicle air conditioner according to one of the preceding claims, **characterized in that** a flap (12; 12'), considered in the normal flow direction, is provided at the end of the hot air duct (8), which presents a backflow of hot air through the heater (6) in auxiliary heating operation.

7. Motor vehicle air conditioner according to one of the preceding claims, **characterized in that** the vaporizer (5) has air flowing through it both in normal operation and also in auxiliary heating operation.

8. Method for operating a motor vehicle air conditioner having a fan (4), a vaporizer (5), a heater (6), an auxiliary heating unit (7), a hot air duct (8), a cold air duct (9), which bypasses the heater (6), and an air mixing flap (11), which regulates the hot air flow through the heater (6) via the hot air duct (8) and the cold air flow through the cold air duct (9), **characterized in that** in the event of a change of the operating mode from formal operation, to auxiliary heating operation, the air mixing flap (11) close the cold hair duct and the flow direction, in the cold air duct (9) is reverted.

## Revendications

1. Système de climatisation d'un véhicule automobile comprenant un dispositif de chauffage (6) et un chauffage supplémentaire (7), en particulier un chauffage fourni par le carburant, pour un fonctionnement en mode chauffage auxiliaire, un conduit d'air chaud (8), un conduit d'air froid (9) contournant le dispositif de chauffage (6), et comprenant un volet mélangeur d'air (11) qui régule le flux d'air chaud traversant le dispositif de chauffage (6) via le conduit d'air chaud (8), et le flux d'air froid traversant le conduit d'air froid (9),
**caractérisé en ce que** le conduit d'air froid (9), en fonction de positrons du volet, peut, au cours du fonctionnement en mode normal, être traversé suivant une première direction, et, au cours d'un fonctionnement en mode chauffage auxiliaire, le volet mélangeur d'air (11) ferme le conduit d'air froid (9), le conduit d'air froid (9) pouvant être traversé suivant une direction opposée à la première direction.

2. Système de climatisation d'un véhicule automobile selon la revendication 1, **caractérisé en ce que** le conduit d'air froid (9), au cours du fonctionnement en mode chauffage auxiliaire, fournit de l'air chauffé par le chauffage supplémentaire, au moins à un conduit d'air qui se prolonge jusqu'à l'habitacle du véhicule.

3. Système de climatisation d'un véhicule automobile selon la revendication 2, **caractérisé en ce que** le conduit d'air, qui se prolonge, va jusqu'à un espace arrière (Fh) prévu pour les pieds.

4. Système de climatisation d'un véhicule automobile selon l'une quelconque des revendication précédentes, caractérisé en ce qui le chauffage supplémentaire est un chauffage fourni par le carburant, chauffage qui est disposé en étant séparé du dispositif de chauffage (6) et de l'évaporateur (5), par une cloison de séparation (14) du véhicule automobile, où la cloison de réparation (14) présente au moins une ouverture pour le passage d'un conduit d'air.

5. Système de climatisation d'un véhicule automobile selon l'une quelconque des revendications précédentes, **caractérisé en ce qu'**il est prévu un volet de chauffage auxiliaire (13 ; 13') qui régule le flux d'air à travers le chauffage auxiliaire (7).

6. Système de climatisation d'un véhicule automobile selon l'une quelconque des revendications précédentes, **caractérisé en ce qu'**un volet (12 , 12'), vu dans la direction anormale d'écoulement, est prévu au niveau de l'extrémité du conduit d'air chaud (8), lequel volet empêche un retour de flux d'air chaud de se produire à travers le dispositif de chauffage (6) au cours du fonctionnement en mode chauffage auxiliaire.

7. Système de climatisation d'un véhicule automobile selon l'une quelconque des revendications précédentes, **caractérisé en ce que** l'évaporateur (5) est traversé par de l'air en circulation, aussi bien au cours du fonctionnement en mode anormal qu'au cours du fonctionnement en mode chauffage auxiliaire.

8. Procédé de fonctionnement d'un système de climatisation d'un véhicule automobile comprenant un pulseur (4), un évaporateur (5), un dispositif de chauffage (6), un chauffage auxiliaire (7), un conduit d'air chaud (8), un conduit d'air froid (9) contournant le dispositif de chauffage (6), et comprenant un volet mélangeur d'air (11) qui régule le flux d'air chaud traversant le dispositif de chauffage (6) via le conduit d'air chaud (8), et le flux d'air froid traversant le conduit d'air froid (9),
**caractérisé en ce que** le volet mélangeur d'air (11), au cours d'un changement de mode de fonctionnement, passant du fonctionnement en mode normal au fonctionnement en mode chauffage auxiliaire, ferme le conduit d'air froid, et la direction d'écoulement dans le conduit d'air froid (9) est inversée.
